# EUROPEAN PATENT APPLICATION

(11) **EP 1 005 186 A2**
(43) Date of publication of application: **31.05.2000**
(21) Application number: 99309429.1
(22) Date of filing: 25.11.1999
(51) Int. Cl.: H04H 1/02, H04N 7/173, H04N 7/16

(54) **Method and system for distributing audiovisual information from a broadcast server and apparatus for reproducing the audiovisual information received from the broadcast server**

(30) Priority: 27.11.1998 JP 33770198; 27.11.1998 JP 33770298
(71) Applicant: SONY CORPORATION, Tokyo (JP)
(72) Inventor: Yoshida, Teruyuki, Shinagawa-ku, Tokyo (JP); Fujiwara, Jiro, Shinagawa-ku, Tokyo (JP)
(74) Representative: Harris, Ian Richard

(57) **Abstract**

An information furnishing system for sending the chargeable information including video and/or audio data from an information center to a subscriber. The system includes an allotting center for allotting the chargeable information, and an information terminal for storing the chargeable information allotted from the allotting center. The allotting center allots the chargeable information based on the categories of the chargeable information transmitted from the allotting center. If the chargeable information in the stored categories is reproduced and used, the information terminal transmits the using information corresponding to the use to the allotting center.

## Description

### BACKGROUND OF THE INVENTION

### Field of the Invention

This invention relates to an information furnishing system and an information furnishing method for sending the chargeable information including video and/or audio data from an information center to a subscriber, and an information reproducing apparatus provided on the side of the subscriber.

### Description of the Related Art

Heretofore, the information, such as video, audio or game, is furnished unidirectionally via a ground wave or satellite television, while it is not possible to receive the service such as receiving and viewing a software the subscriber desires to view at a desired time.

There has recently been proposed a system, termed a near on-demand system, in which several channels are used for the same program, under utilization ofa satellite multi-channel broadcast, now in widespread use with the lowering in the satellite-related cost, and the program start time of respective channels is shifted by a few minutes to relieve the temporal constraint imposed on the viewer.

However, this near on-demand system, while assuring certain temporal freedom, cannot be said to be optimum since the software is unidirectional and the program cannot be paused as desired by the user.

There is also a rental system, such as video rental, other than the broadcast, in which the software can be selected by the user and can be viewed and stopped or rewound as desired by the user. This system has a drawback that the user has to borrow the software at a video rental shop and to return it after replay, which significantly inconveniences the user.

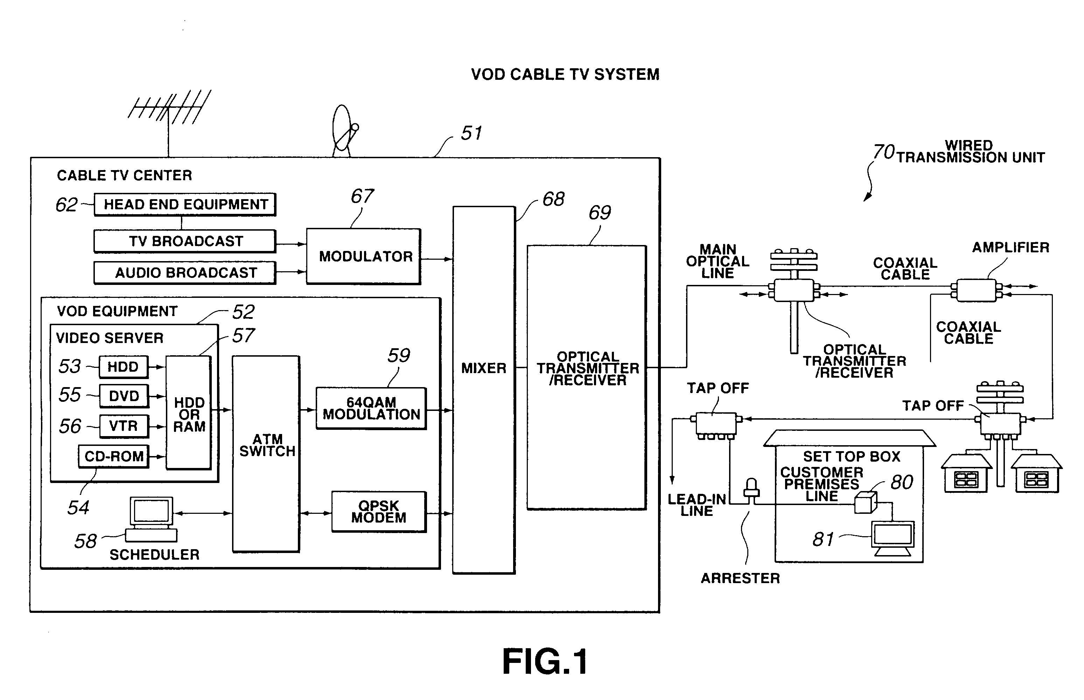

There is also a video-on-demand (VOD) cable television system, shown in Fig. 1, the commercial realization of which is being investigated at the cable television (CATV) stations in order to cope with the speedup and increasing capacity of the computer, server and digital broadcast techniques.

This VOD cable television system is made up of a cable television center 51, furnishing the chargeable information, a wired transmission unit 70 for transmitting the chargeable information from the cable television center 51 and a set top box 80 for receiving the chargeable information furnished from the cable television center 51 over the wired transmission unit 70 for reproduction in the user's premises, as shown in Fig.1.

When the user desired to use this system, he or she selects a software from a menu demonstrated on a display 81 connected to the set top box 80 and demands it of the cable television center 51. This software then is immediately transmitted over the wired transmission unit 70 to the set top box 80 on the user's premises by a video server 52 on the cable television center 51 for viewing on the display 81.

There is also proposed a system having the function in which the user can stop or rewind the software at a desired time. There is, in addition, such a system which can furnish as many as 10,000 titles of video software for selection and use by the user. This system can furnish the service comparable to that furnished by the video rental shop such that a large quantities of the software are present and available for the user for selection and replay on the VTR without the user having to borrow or return the video software at the video rental shop.

However, for realizing this service, it is necessary for the cable television center 51 to store as many as thousands and even tens of thousands of titles of the video software and to furnish them speedily and interactively responsive to user's requests.

The chargeable information is digitized and stored in the video server 52 which is made up of a large number of recording mediums, such as hard discs 53, CD-ROMs 54, DVDs 55 and VTRs 56, and transient storage mediums, such as hard discs or RAMs 57.

A scheduler 58 is responsive to a request by a user to retrieve a title requested by the user and controls the video server 52 to supply the retrieved title to the user.

Since this task needs to be executed in a short time even if hundreds or even thousands of requests occur simultaneously. Therefore, speedup of hardware and the software of the video server 52 and the scheduler 58 is indispensable.

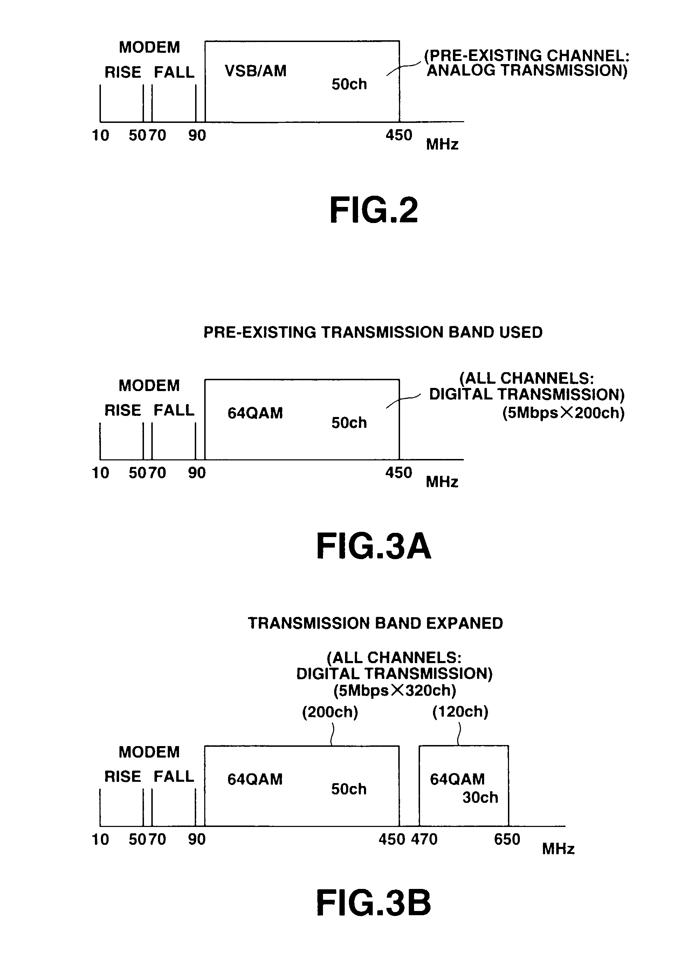

On the other hand, the current transmission path of the CATV is an analog transmission path presupposed to be used for broadcast re-transmission, as shown in Fig.2, with the most prevalent one bing such a transmission path designed to render broadcast services for up to approximately 50 channels with the transmission band of approximately 450 MHz.

Therefore, the current transmission capacity of the CATV is insufficient to process and transmit the requested software if hundreds or thousands of requests occur simultaneously in a concentrated fashion, such that it is necessary to alter or supplement the current transmission equipment to a large-capacity analog transmission path that is able to furnish a large quantity of the digital data.

More specifically, suppose that hundreds or thousands of requests occur simultaneously in a concentrated fashion, and that the subscribers desire respective different titles at different times. It is noted that if a number of titles equal to that of the subscribers is requested at relatively offset times on the same transmission path, such transmission is deemed to be the transmission of respective different titles, so that, if one hundred thousand subscribers are connected to the same transmission path, the transmission capacity needs to be sufficient to cope with hundreds and even thousands of requests simultaneously.

There are currently investigated a variety of methods to raise the transmission capacity of the transmission path of the CATV. Of these, a few promising examples are hereinafter explained.

The transmission band for the CATV is prevalently 450 MHz. If the totality of transmission paths of analog modulation is to be changed to the transmission paths of digital modulation, the number of channels that can be transmitted simultaneously is approximately 200, which is about four times as many as that for analog modulation, as shown in Fig.3A.

If the band is extended to 650 MHz, it is possible to increase the number of channels to 320.

Meanwhile, if the video-on-demand is to be realized by the cable television center (CATV station) 51, both the development cost and the equipment cost are raised, such that inexpensive services cannot be offered to the users.

If the pre-existing transmission path is used, the routine broadcast is received over an antenna equipment 61 and amplified by a head end equipment 62. The video and audio are demodulated by a demodulator 63.

The video and audio signals are converted by A/D converters 64, 64A into digital signals, which then are compressed in signal volume by compressors 65V and 65A, using a compression method, such as MPEG2. The video and audio signals then are multiplexed in a digital system by an adder 66. The multiplexed signals are modulated by 64 QAM (quadrature amplitude modulation) unit 67 and frequency multiplexed by a mixer 68. The resulting multiplexed signals then are transmitted to a wired transmission unit 70 via an optical transmission/reception unit 69.

The VOD system selects the demanded video title from the video server 52 in which a number of video titles are stored under compression. The selected video title is modulated by 64 QAM modulation by a QAM modulation unit 59 and frequency multiplexed by the mixer 68. Thus, in the cable television center 51, the pre-existing system needs to be changed significantly.

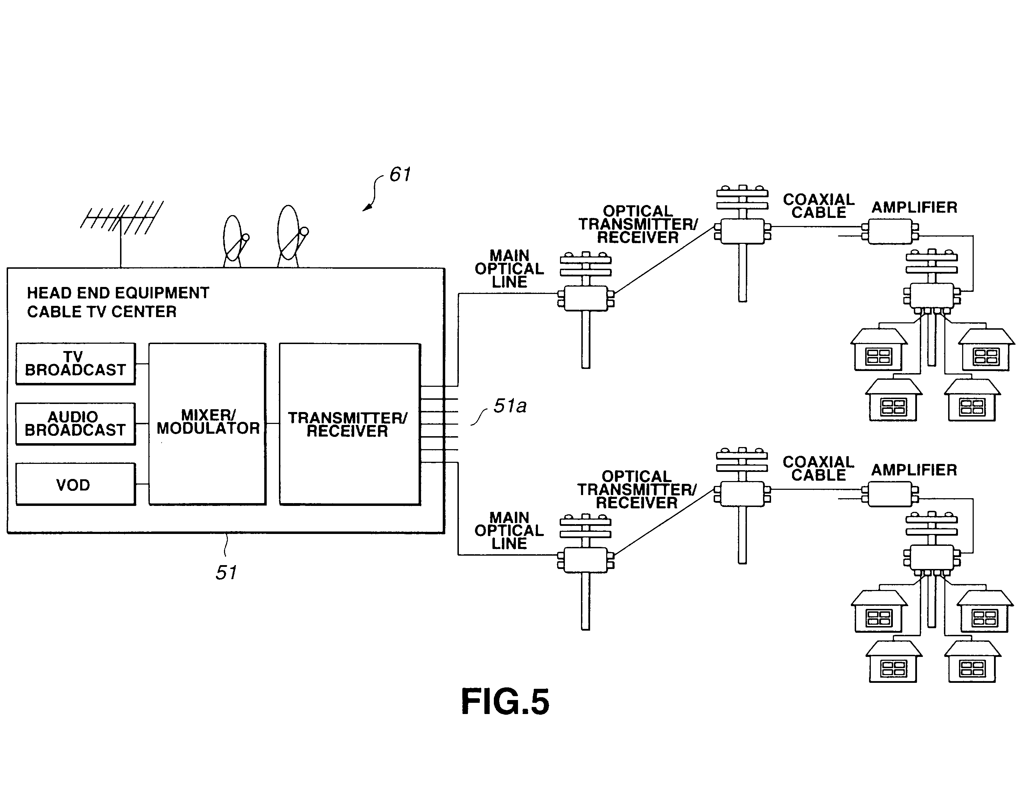

There is also encountered a problem that a number of channels corresponding to the number of subscribers needs to be procured. In order to remedy this problem, it may be contemplated to have the channel branched as necessary at an output 51a of the cable television center 51, as shown in Fig.5. However, if the branched channel is converted into a digital network, it is necessary to make enormous investment such as in a channel branching equipment.

On the other hand, if the routine broadcast is digitized and re-transmitted, there is encountered a problem that interchangeability between the digital reception equipment (set top box) 80 and the pre-existing reception system is lost.

Thus, it is being contemplated to use a frequency band exceeding 450 MHz to transmit the modulation system such as 64QAM and to render VOD services in this transmission range.

If the band up to 650 MHz is used in the digital transmission system employing the 64QAM modulation, as shown in Fig.2, the capacity for concurrent transmission that can be acquired is 120 channels at most. If the serviceability for subscribers simultaneously employing the network is assumed to be 10% at the maximum, the number of subscribed that can be connected simultaneously to the network is 1000. If the number of the subscribers to the CATV is 10000, it is necessary to provide approximately 10 transmission paths branched from the CATV station.

The video server 52 is also required to have the capabilities of concurrently processing hundreds or even thousands of titles, so that the server is required to be of large capacity and fast access type, whilst the control software of the server is required to have the capability of intricately supervising the server.

The result is the extremely high development and equipment costs such that inexpensive services cannot be rendered to the users.

Moreover, the copyright has accrued in this system in the information utilized by the user. Since the information is distributed among household servers in each home, there is a possibility of jeopardizing the right of the copyright owner such as unauthorized use or duplication.

### SUMMARY OF THE INVENTION

It is therefore an object of the present invention to provide an information furnishing system in which development and equipment costs can be curtailed to enable inexpensive services to the users.

It is another object of the present invention to provide an information furnishing system in which it is possible to protect the copyright owner.

Particular and preferred aspects of the invention are set out in the accompanying independent and dependent claims. Features of the dependent claims may be combined with those of the independent claims as appropriate and in combinations other than those explicitly set out in the claims.

In one aspect, the present invention provides an information allotting system for allotting the chargeable information composed of data including video data and/or audio data, including an allotting center for allotting the chargeable information, and information terminal means for storing the chargeable information allotted from the allotting center. The allotting center allots the chargeable information based on the categories of the chargeable information transmitted from the allotting center. If the chargeable information in the stored categories is reproduced and used, the information terminal means transmits the using information corresponding to the use to the allotting center.

In another aspect, the present invention provides an information allotting system for allotting the chargeable information composed of data including video data and/or audio data, including an allotting center for allotting the chargeable information, and information terminal means for storing the chargeable information allotted from the allotting center. The information terminal means includes reproducing means for reproducing the stored chargeable information, decoding means for decoding the chargeable information on coincidence of the encryption information appended to the chargeable information outputted from the reproducing means with the encryption information of the information terminal means, and storage means for storing the hysteresis information testifying to the decoding of the chargeable information. The allotting center charges the information terminal means based on the hysteresis information.

In still another aspect, the present invention provides an information allotting system for allotting the chargeable information composed of data including video data and/or audio data, including an allotting center for allotting the chargeable information, and information terminal means having reproducing means for reproducing the chargeable information from a removable recording medium in which the chargeable information allotted from the allotting center is stored. The information terminal means further includes decoding means for decoding the chargeable information on coincidence ofthe encryption information appended to the chargeable information outputted from the reproducing means with the encryption information of the information terminal means, and storage means for storing the hysteresis information testifying to the decoding of the chargeable information. The allotting center charges the information terminal means based on the hysteresis information.

In still another aspect, the present invention provides an information transmission apparatus for transmitting the chargeable information composed of data including image and/or audio data to an information terminal including supervising means for being fed with the category information of the chargeable information transmitted from the information terminal to output an output control command which performs control to output the chargeable information included in the category information, and output means for outputting the chargeable information recorded on a recording medium to the information terminal based on the output control command from the supervising means.

In still another aspect, the present invention provides an information reception apparatus for receiving the chargeable information composed of data including video and/or audio data allotted from the allotting center, including transmission means for transmitting the information specifying the category in the chargeable information to the allotting center, reproducing means for reproducing the chargeable information from a recording medium on which has been recorded the chargeable information allotted from the allotting center based on the category information, control means for controlling the recording and/or reproducing means in such a manner as to select the desired chargeable information from the titles of the chargeable information recorded on the recording medium and to reproduce the chargeable information recorded on the recording medium, and storage means for storing the hysteresis information indicating that the chargeable information has been used.

In still another aspect, the present invention provides an information allotting method for allotting the chargeable information composed of data including video and/or audio data from an allotting center to each information terminal, including a first step of transmitting the category-specifying category information of the chargeable information from the information terminal to the allotting center, a second step of allotting the chargeable information from the allotting center to the information terminal, based on the category information, irrespective of whether the allotted information will be used by the information terminal, and a third step of selectively reproducing the chargeable information allotted by the information terminal.

In still another aspect, the present invention provides an information allotting method for allotting the chargeable information composed of data including video and/or audio data from an allotting center to each information terminal, including a first step of transmitting the category-specifying category information of the chargeable information from the information terminal to the allotting center, a second step of allotting the chargeable information from the allotting center to the information terminal, based on the category information, irrespective of whether the allotted information will be used by the information terminal, a third step of decoding the chargeable information on coincidence of the encryption information appended to the chargeable information with the encryption information of each information terminal on reproducing the chargeable information and of transmitting the hysteresis information specifying the fact of use of the chargeable information to the allotting center and a fourth step of charging the information terminal by the allotting center based on the hysteresis information.

In still another aspect, the present invention provides an information allotting method for allotting the chargeable information composed of data including video and/or audio data from an allotting center to each information terminal, including a first step of appending the encryption information discriminating each information terminal to the chargeable information stored in the allotting center, a second step of recording the chargeable information, to which has been appended the encryption information, on a removable recording medium, a third step of selectively reproducing the chargeable information recorded on the removable recording medium, at the information terminal, a fourth step of decoding the chargeable information on coincidence of the encryption information contained in the reproduced chargeable information with the encryption information of the information terminal and storing the hysteresis information specifying that the encryption information has been decrypted, and a fifth step of charging the information terminal by the allotting center based on the stored hysteresis information.

In still another aspect, the present invention provides an information transmitting method for allotting the chargeable information composed of data including video and/or audio data from an allotting center to each information terminal, including a first step of receiving the category-specifying category information of the chargeable information from the information terminal to the allotting center and a second step of transmitting the chargeable information contained in the category information to each information terminal irrespective of whether or not the chargeable information is used by each information terminal.

In yet another aspect, the present invention provides an information receiving method for receiving the chargeable information allotted from an allotting center, the chargeable information being composed of data including video and/or audio data, including a first step of transmitting the category-specifying category information, in the chargeable information, to the allotting center, a second step of selectively reproducing the chargeable information included in the category information from titles of the chargeable information, a third step of storing the hysteresis information specifying the fact of use of the chargeable information and a fourth step of transmitting the stored hysteresis information to the allotting center.

### BRIEF DESCRIPTION OF THE DRAWINGS

Exemplary embodiments of the invention are described hereinafter, by way of example only, with reference to the accompanying drawings, in which:

Fig.1 is a block diagram showing the structure of a conventional VOD cable system.

Fig.2 is a diagrammatic view showing the transmission band of the transmission path for the current CATV with respect to the frequency.

Figs.3A and 3B are diagrammatic views showing specified examples of changing the totality of transmission bands of the current CATV to transmission paths of digital modulation.

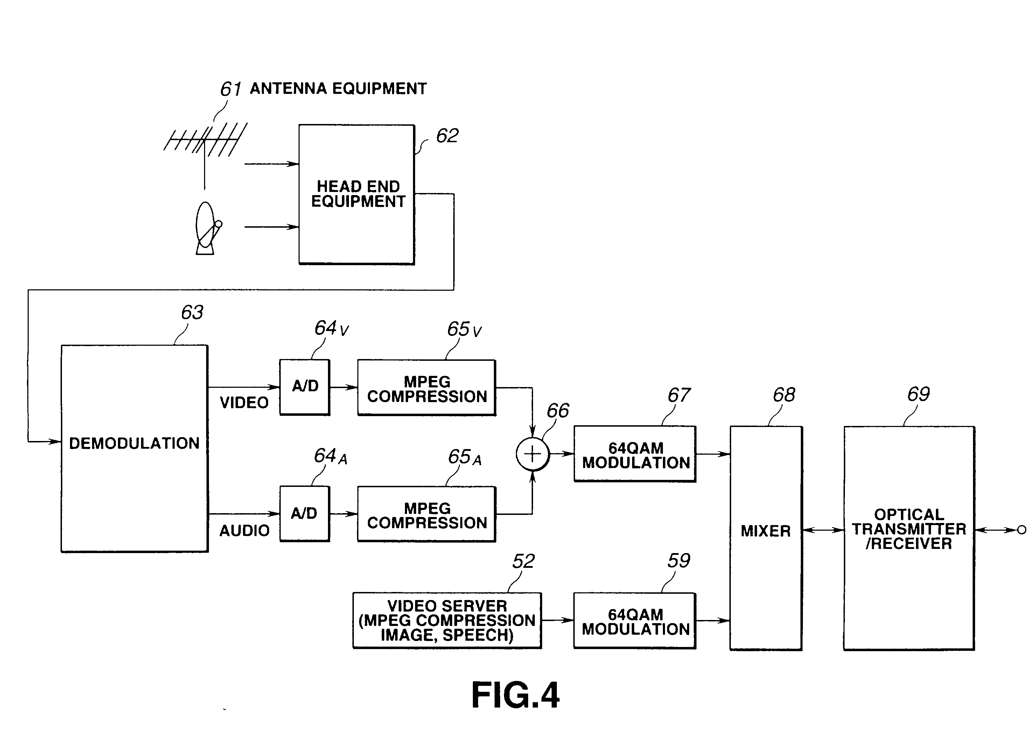

Fig.4 is a block diagram showing the structure of a CATV station of the all-digital transmission system employing an analog transmission path.

Fig.5 illustrates the problems of the number of channels of a CATV station of the all-digital transmission system.

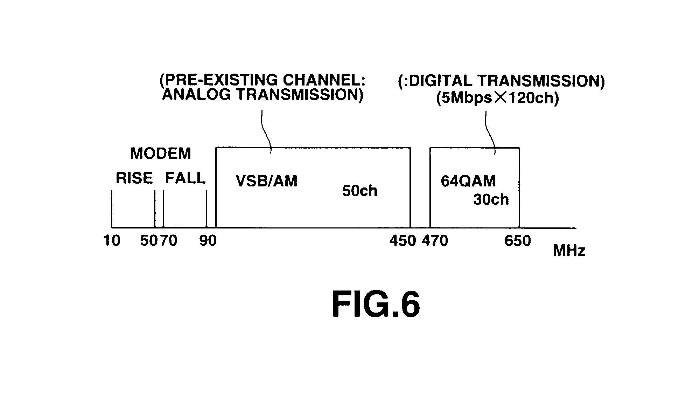

Fig.6 is a diagrammatic view showing a specified example of the transmission band and the frequency actually used in the conventionally VOD cable television system.

Fig.7 is a block diagram of the VOD cable television system embodying the present invention.

Fig.8 is a block diagram showing a detailed structure of a 64 QAM modulation unit in the cable television center constituting the VOD cable television system.

Fig.9 is a graph showing frequency band characteristics of 64 QAM modulated wave from the 64 QAM modulation unit.

Fig.10 is a diagrammatic view showing the transmission band and the frequency as used in the VOD cable television system.

Fig. 11 is a block diagram showing the structure of a VOD cable television system embodying the present invention.

Fig.12 is a block diagram showing the structure of a modification of the VOD cable television system shown in Fig.1.

Figs.13A and 13B are overall views showing a specified structure of a home server used in the VOD cable television system.

Fig.14 is a block diagram showing the structure of a modification of the VOD cable television system shown in Fig.1.

Fig.15 is a block diagram showing the structure of an information furnishing system embodying the present invention.

### DESCRIPTION OF THE PREFERRED EMBODIMENTS

Referring to the drawings, preferred embodiments of the present invention will be explained in detail. The configuration of the preferred embodiment is a video-on-demand (VOD) cable television system furnishing the chargeable information including data such as video data and/or audio data to a cable television subscriber (user).

This VOD cable television system is made up of a cable television center 1, furnishing the chargeable information, a wired transmission unit 20 for transmitting the chargeable information from the cable television center 1 and a home server 30 for pre-storing the chargeable information furnished via the wired transmission unit 20 from the cable television center 1.

This VOD cable television system has a marked feature that, by installing the home server 30 in the user's premises and distributing the storage of the chargeable information, the load imposed on the transmission path is relieved to enable the video-on-demand services to be rendered inexpensively without significantly varying the transmission capability of the pre-existing CATV stations.

That is, the home server 30 installed in the user's premises is such a system in which the information of a category retained to be used by a user no matter whether or not the information is actually used by the user and in which the user can instantaneously read out and exploit the information at any desired time, if selectively.

There is also an advantage that the user is not charged for the information as long as it is stored in the home server 30 and that the information for charging is obtained based on the information using information (playback hysteresis information) only when the user has utilized the information. There is, moreover, an advantage that, by installing the home server 30 in the user's premises, the instantaneous information furnishing service cam be realized easily and inexpensively.

As the information storage means in the home server 30, utilized in this case, such information storage means as is the most inexpensive and desirable for the user at the use time can be used, irrespective of the types of the information storage means, such as tapes, hard discs, MO discs, CD-RAMs, semiconductor memories or DVD-RAMs. In consideration of the characteristics of the present invention, the recording medium most inexpensive at present is a tape. Therefore, such a hybrid system is herein contemplated in which the main recording medium used is a tape and a hard disc is used as a transient memory. It is also contemplated to switch the recording mediums depending on the contents of the stored chargeable information. The chargeable information having instantaneous character, such as a news program or weather forecast, can be recorded on the hard disc, whilst the chargeable information not having such character, such as sports, drama or motion pictures, can be recorded on a tape. In utilizing the home server 30, it may be advisable to set on the GUI which recording medium is to be used for recording by the user.

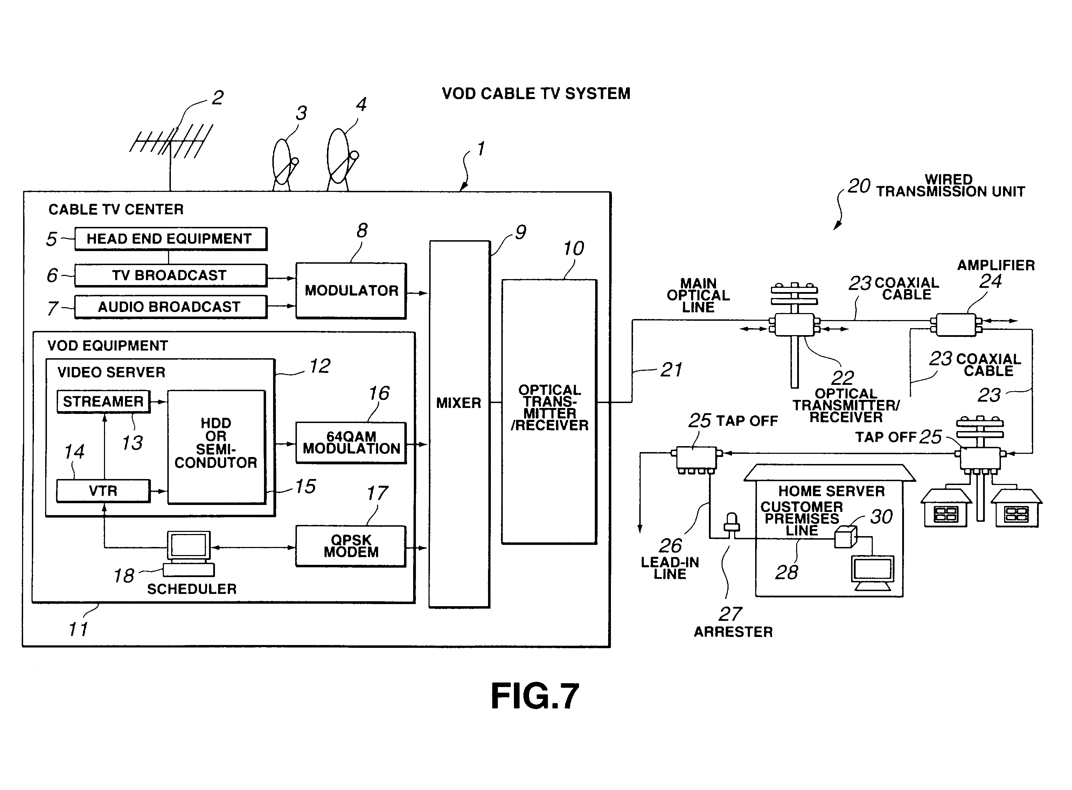

Referring to Fig.7, the structure of the VOD cable television system will be explained in detail.

First, a head-end equipment 5 in the cable television center 1 amplifies and demodulates the ground wave, BS broadcast wave and the CS broadcast wave, received over an antenna for ground wave 2, an antenna for BS 3 and an antenna for CS 4, to route the resulting wave to a TV broadcasting equipment 6. The TV broadcasting equipment 6 produces the routine TV information for voluntary TV broadcasting or broadcasting unique to the CATV station. An audio broadcasting equipment 7 produces the routine audio information for voluntary audio broadcasting. A modulator 8 applies vestigial sideband modulation (VSB modulation) for cable channel on the TV information from the TV broadcasting equipment 6 or on the audio information from the audio broadcasting equipment 7. A mixer 9 multiplexes the routine broadcast, composed of the VSB modulated TV information or audio information, on the signal transmitted from a VOD equipment 11, as later explained, to route the resulting multiplexed signals to an optical transmitter/receiver 10, which then applies electro-optical conversion to the multiplexed signals from the mixer 9 to send out the resulting converted signals over the wired transmission unit 20 comprised of a coaxial cable.

The cable television center 1 also includes a VOD equipment 11. The video server 12 in the VOD equipment 11 is an automated system in which sequential devices, such as a tape streamer 13 or a VTR 14, which can be purchased at low costs despite large capacity, are used as main devices, and in which a hard disc drive (HDD) or a semiconductor memory for transient storage of the chargeable information from this main device is used as an auxiliary device. The chargeable information can also be recorded on two different mediums, namely the HDD and the semiconductor memory. In this case, the chargeable information is previously stored in the HDD and the chargeable information to be reproduced is transferred from the HDD to the semiconductor memory, from which the information is reproduced, because the readout speed of the semiconductor memory is faster than that of the HDD. Also, the video server is provided with plural input/output channels each of which is configured for time-divisionally accessing the HDD 15 to enable concurrent input/output. In the embodiment of Fig.1, a 2-IN 1-OUT configuration is realized by two input/outputs of the streamer 13 and the VTR 14 and an output to the 64 QAM modulator 16. Alternatively, an 1-IN 5-OUT configuration or other various input/out configurations may also be used.

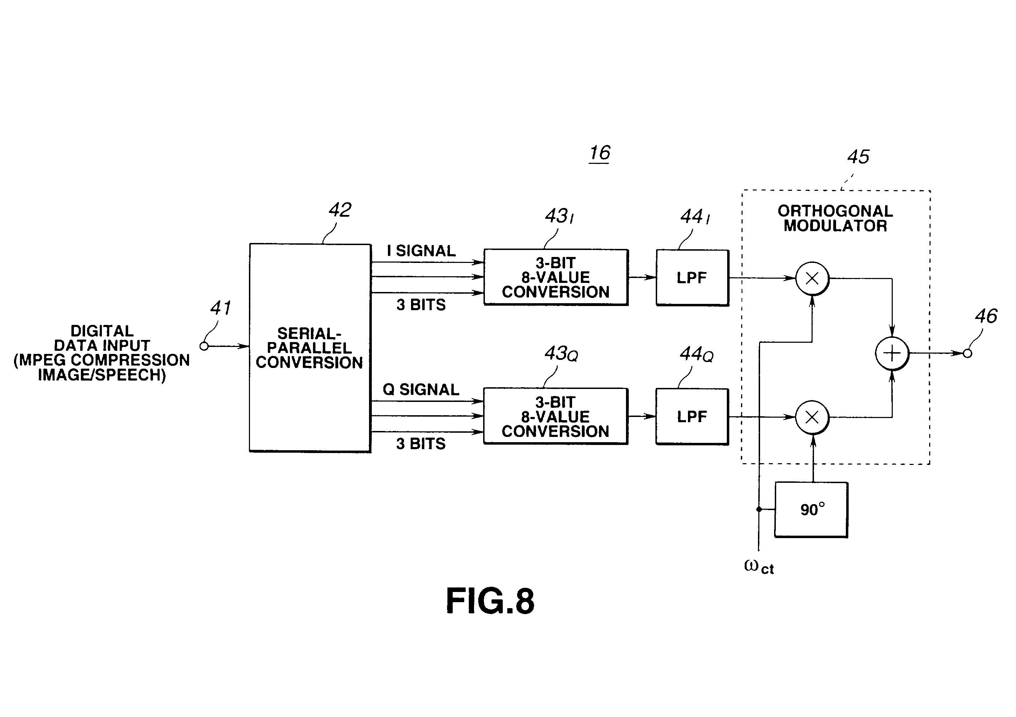

Referring to Fig.8, the 64 QAM modulator 16 is briefly explained. It is assumed for example that video and audio serial digital data compressed by MPEG to 6 Mbps and turned into 8 Mbps on appendage of the error correction code (ECC) (digital data input) is inputted from a video server 12 to the 64 QAM modulator 16 via an input terminal 41.

A serial/parallel conversion circuit 42 converts the digital data input into parallel data every three bits, so that former 3 bits and latter 3 bits will be an I-signal and a Q-signal, respectively.

The I- and Q-signals are converted by 3-bit 8-value converters 43I, 43Q to 8-valued analog signals at a sampling frequency of 2 MHz. These 8-values analog signals are bandwidth-limited by LPFs 44I, 44Q, and are used to modulate a carrier wave (ωct) by an orthogonal modulator 45. This outputs a 64QAM modulated wave, having a frequency band from 3 MHz to 3 MHz, to a mixer 9.

Reverting to Fig.7, a QPSK modem 17 and a scheduler 18 are provided in the VOD equipment 11. The QPSK modem 17 performs the up and down modem functions and takes charge of the input/output function of the scheduler 18. The scheduler 18, informed of the user requests or the reproduced state of the chargeable information from the QPSK modem 17, controls and supervises the video server 12.

The wired transmission unit 20 includes an optical trunk line 21, such as an optical fiber, an optical transmission device 22 for transmitting, distributing and photoelectrically converting the optical signals from the optical trunk line 21, a coaxial cable 23, an amplifier 24, a distributor 25, a lead-in line 26, an arrester 27 and a wiring in user's premises 28.

The home server 30, provided in the user's premises, pre-stores the chargeable information supplied from the cable television center 1 over the wired transmission unit 20 in an enclosed large-capacity storage unit. If the user designates the necessary information to reproduce it from the large capacity storage unit, it outputs the information indicating that effect as the above-mentioned playback hysteresis information.

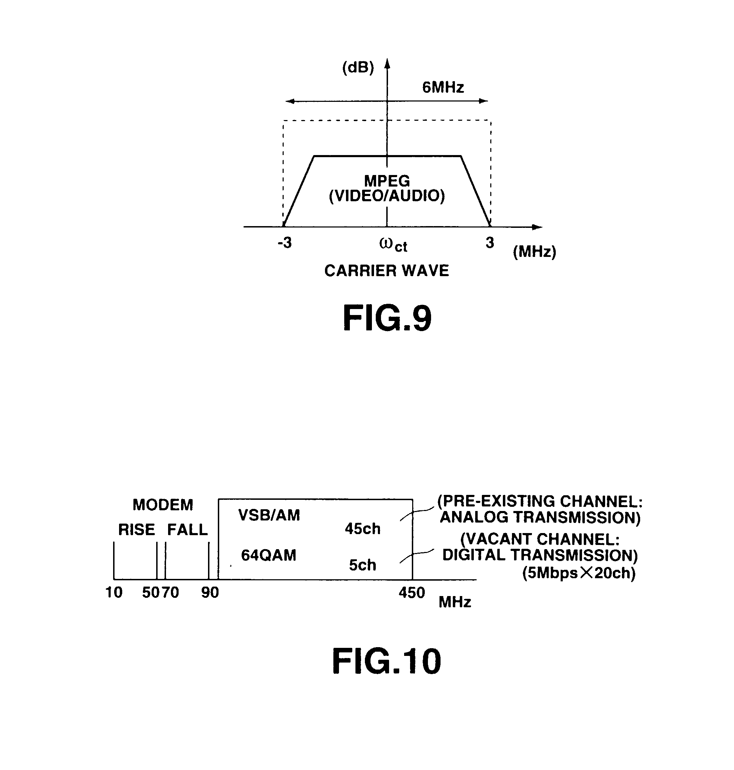

The chargeable information is transmitted from the cable television center 1 to the home server 30 by exploiting the vacant channel of the wired transmission unit 20 of the analog transmission system. Fig.10 shows a specified example of the relation between the frequency and the transmission band used in the preferred embodiment. Of the frequency band of 90 to 450 MHz of the analog transmission path of the pre-existing CATV station, five vacant channels are used to enable digital transmission of 20 channels of 5 Mbps data.

The home server 30 stores the transmitted chargeable information in the hard disc. The storage medium of the home server 30 may be a random-accessible recording medium, such as a semiconductor memory or DVD, or a tape as in the VTR, either alone or in combination. The reason is that news or weather forecast, having an instantaneous character, may be stored in the random-accessible medium, whilst the drama, sports or motion pictures can be recorded on a tape-shaped recording medium, as in the above-mentioned video server 12.

The above-mentioned chargeable information, transmitted from the cable television center 1, may be plural chargeable information, previously selected by the user, or the plural chargeable information of a category that is anticipated to be used by the customer. These chargeable information are transmitted in advance and stored in information storage means in the home server 30, no matter whether the information is actually used by the customers.

The user's request when the user selects the chargeable information in advance is transmitted to the scheduler 18 by exploiting the up transmission path of the wired transmission unit 20, that is the transmission path in which the information flows from the user's premises to the cable television center 1. That is, the user's request is sent via the up transmission path of the wired transmission unit 20 to the scheduler 18 via the optical transmitter/receiver 10, mixer 9 and the QPSK modem 17. For example, the category information, such as motion picture, sports, drama or game software, is transmitted as the user's request by exploiting the home server 30. The category of a motion picture may also include that of an US motion picture, a French motion picture, a Japanese motion picture, an action motion picture, a comedy or a love romance, among the motion pictures, or the actress-based category. The category of sports may be soccer or baseball. The category of soccer may also be event-based such as Olympic soccer or the world soccer. The category of a game software may be that of an action game, a sports game etc.

The scheduler 18 is responsive to the transmitted user's request to control and supervise the video server 12 to transmit in advance the chargeable information which is in meeting with the request. Of the chargeable information stored in the video server 12, VTR 14 or in the tape streamer 13, the chargeable information requested by the user's request is transmitted. The chargeable information, transmitted from the center 1 via the wired transmission unit 20, is stored in the home server 30. Depending on the stored state as displayed on the monitor of the home server 30, the user selects and views the chargeable information he or she desires to view. If the desired chargeable information is not stored in the home server 30, the user waits until it is stored, in a manner different from the conventional VOD or new VOD (NVOD).

The home server 30 includes five cassette compartments 32 for housing the cassette tapes. Each cassette tape 31 has a storage capacity of 45 GB. Each cassette compartment 32 is able to accommodate four cassette tapes 31. The home server 30 has an enclosed recording and/or reproducing unit 33 for selectively recording and/or reproducing the 20 cassette tapes.

If the data capacity of a 2-hour motion picture, compressed to 5 Mbps by MPEG2, is 4.5 GB, ten motion picture titles can be accommodated in a cassette, such that 20 cassettes or 200 motion picture titles can be accommodated in this home server 30.

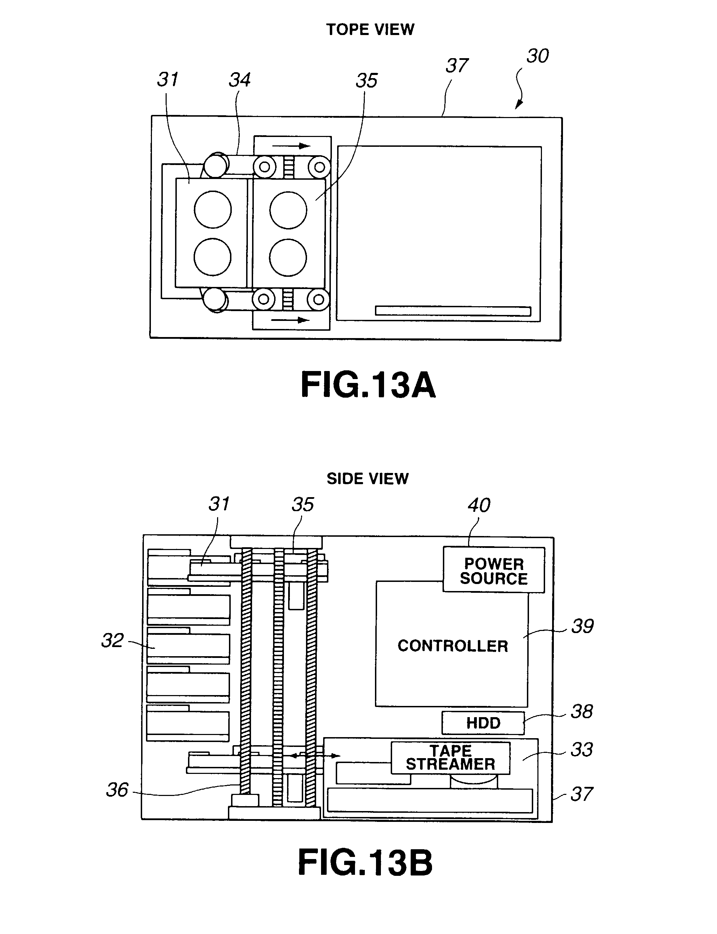

A tape movement belt 34, shown in a top plan view of Fig.13A, pulls out the cassette tape 31, desired by the user, from the cassette compartment 32, and houses it in a box or bin 35, which then is moved upwards to an inlet to the recording and/or reproducing device 33.

The bin 35 is moved by an elevator 36 up to the tape inlet to a tape streamer 33. The cassette tape 31, transported by the elevator 36, is inserted by the pin 35 into the tape streamer 33. The chargeable information is reproduced by the tape streamer 33 from the cassette tape 31.

The structure and the operation of the home server 30 is hereinafter explained.

In the following explanation, it is assumed that the source of supply of the chargeable information is the CATV station 1. It is noted that the information is not necessarily transmitted over the wired transmission unit 20, such that it may also be a satellite.

The above-mentioned chargeable information is sent from the video server 12 of the CATV station 1 to the totality of the subscribers (users) over the wired transmission unit 20. It is noted that the wired transmission unit 20 is the analog transmission system and the chargeable information is transmitted using a vacant channel.

The chargeable information, namely several thousand and even a ten thousand titles of, for example, motion pictures, is transmitted sequentially and repeatedly in a pre-set period. The title herein means a unit of the chargeable information, for example, a motion picture.

The home server 30, provided on the user's premises, recognizes the titles flowing via the wired transmission unit 20 by its title recognition unit 301 and pre-empts one of such titles if it is the information or the category of the information requested by the user.

The title pre-empted by the title recognition unit 301 is sent to a scrambler 303 which also is fed with the encrypted codes from an encryption generator 302 configured to generate the encryption proper to the home server 30. The scrambler 303 synthesizes or appends the encryption to the chargeable information of the title, by way of scrambling, for recording and storage in a HDD 304.

In the chargeable information stored in the HDD 304, that subjected to the control command by the user for reproduction is reproduced from the HDD 304. The video and audio signals, constituting the title and the material of the category requested by the user, and transmitted from the CATV station 1, are stored, and the user selects the chargeable information desired to be viewed depending on the title and the storage state displayed on a monitor 307. This chargeable information is the encrypted chargeable information.

The chargeable information, reproduced on selection by the user, is outputted from the HDD 304 and inputted to a descrambler 305.

The descrambler 305 collates the inherent encryption generated by the encryption generator 302 to the encryption synthesized or appended to the encrypted chargeable information. In case of coincidence, the descrambler descrambles the encrypted chargeable information to decode the information.

The chargeable information, descrambled and decoded by the scrambler 303, is sent to a title recognition circuit 306, which outputs the chargeable information of the title via video route to display the image on a receiver 307.

The title recognition circuit 306 also recognizes the title number of the chargeable information to store the recognized title number in a memory 308. This title number is sent at a pre-set timing to a modem 309.

This modem 309 appends an inherent mechanical number from a mechanical number holding unit 300 to the title number. The title number, having the mechanical number appended thereto, becomes the decoding hysteresis information indicating the decoding of the encrypted chargeable information. This decoded hysteresis information may also be termed the information using hysteresis information. From this modem 309, the decoding hysteresis information is sent to the CATV station 1 using the decoding hysteresis information. It is also sent to the CATV station 1 over the Internet. Alternatively, the decoding hysteresis information may be sent to the CATV station 1 using the up network of the wired transmission unit 20.

The CATV station 1 receives the decoding hysteresis information by its scheduler 18, which controls the video server 12 and which also generates the charging information from the decoding hysteresis information. Thus, the CATV station 1 can charge the user for using the system. The CATV station 1 can also be apprised of the user's request via this scheduler 18. It is also possible to anticipate new titles likely to be requested in future, from user to user, and to send the chargeable information of the anticipated title to the home server 30.

The decoding hysteresis information may also be sent in real-time to the scheduler 18 of the CATV station 1, using a telephone network 41 or the up network of the wired transmission unit 20, each time the encrypted chargeable information is reproduced and decoded.

Thus, the home server 30 superposes the encryption generated by the encryption generator on the chargeable information and reproduces the chargeable information only if the encryption descrambled by the descrambler 305 coincides with the encryption generated by the encryption generator, so that the right of the copyright owner can be protected against an act possibly jeopardizing the right of the copyright owner, such as unauthorized use.

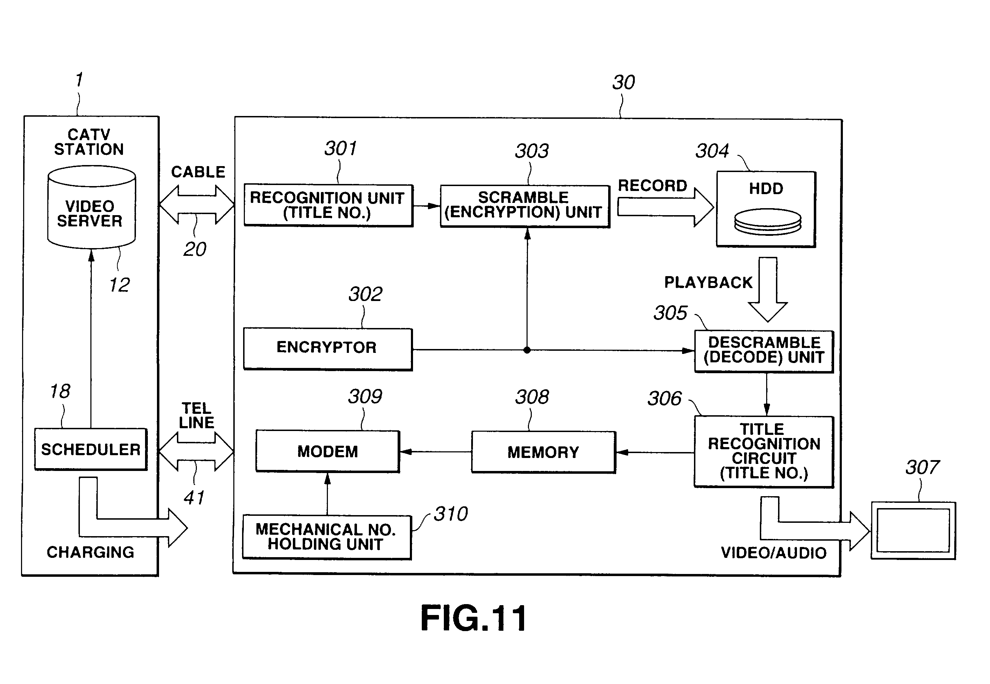

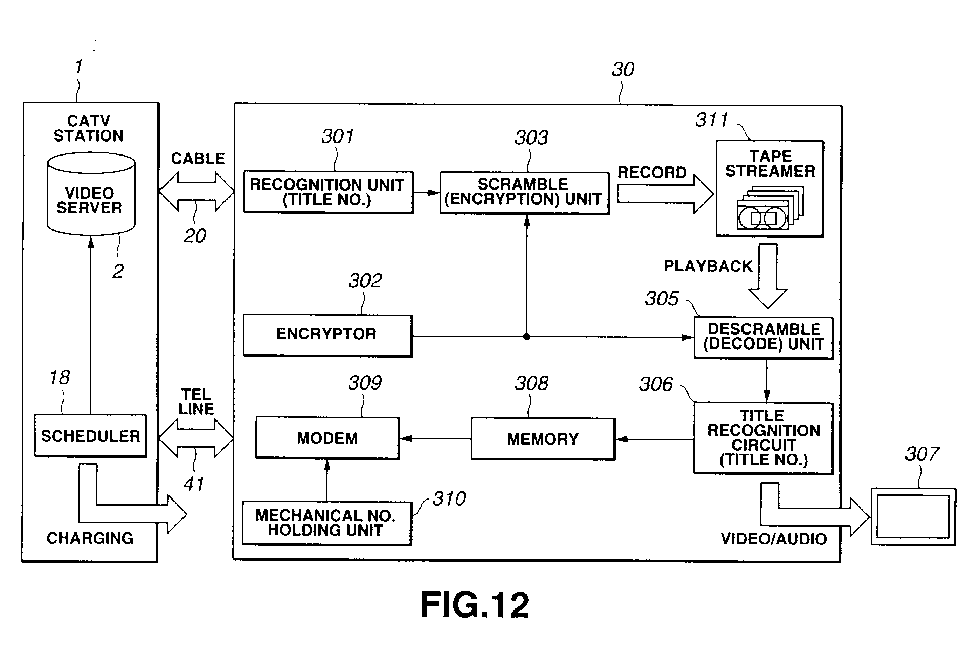

The present invention is not limited to the home server shown in Fig. 11 and can be applied to a modification shown in Fig.12.

The home server 30, shown in Fig.12, is characterized in that a tape streamer 311 for recording and/or reproducing the information for the plural cassette tapes, rather than the HDD, is used as a recording medium. The cassette tape is able to record the large capacity, while being inexpensive and portable. The tape streamer itself may be configured to be portable.

In this case, it is necessary to avoid the chargeable information stored in the home server 30 from being easily reproduced by the home server. Stated differently, it is necessary to avoid the chargeable information stored in the tape streamer 311 of the home server 30 from being easily reproduced by the home server.

In this home server 30, the scrambler 305 is fed with the encryption from an encryption generator 312 configured for generating the encryption inherent to the system. The scrambler 303 synthesizes or appends this encryption to the title-based chargeable information, recorded on the cassette tape, by way of scrambling. The scrambled encrypted chargeable information is recorded and stored in the home server 30.

Thus, if the streamer 311 is loaded on the home server 30 of another user's premises, or if the cassette tape is loaded on a tape streamer 311 of the other user's premises, it is not possible for the home server 30 of the other user's premises to descramble the scrambled information.

That is, since the home server 30, shown in Fig.12, records the encryption proper to the reception device on the title-based chargeable information on the cassette tape, the information cannot be restored, even if the cassette tape or the tape streamer is dismounted for reproduction on another device, thus obstructing unauthorized use.

The same holds if a portable disc recording and/or reproducing apparatus or a portable disc-shaped recording medium is used instead of the tape streamer 311.

In an outer casing 37 of the home server 30, there is also mounted a hard disc 38. On the hard disc 38, the table of contents of 200 titles recorded on the above 20 cassette tapes and those of the titles stored in the video server 12 of the cable television center 1 are recorded along with epitomes thereof. On startup of the home server 30, the contents initially recorded on the hard disc 38 are demonstrated on e.g., a display.

Within the home server 30, there is also mounted a controller 39. If the user has selected a desired title from the table of contents demonstrated on the display, and if the title has been recorded on a cassette tape in the home server 30, the controller 39 automatically selects the cassette tape to control the tape movement belt 34, bin 35 and the elevator 36 to set the cassette tape on the tape streamer 33 to reproduce the thus set tape streamer 33.

Although the cassette tape is used in the above-described embodiment as the recording medium, the recording medium may also be a semiconductor memory in the hard disc, either alone or in combination, as described above.

Within the home server 30, there is enclosed a power source 40fed with the power from an AC source in the premises to furnish the current at all times.

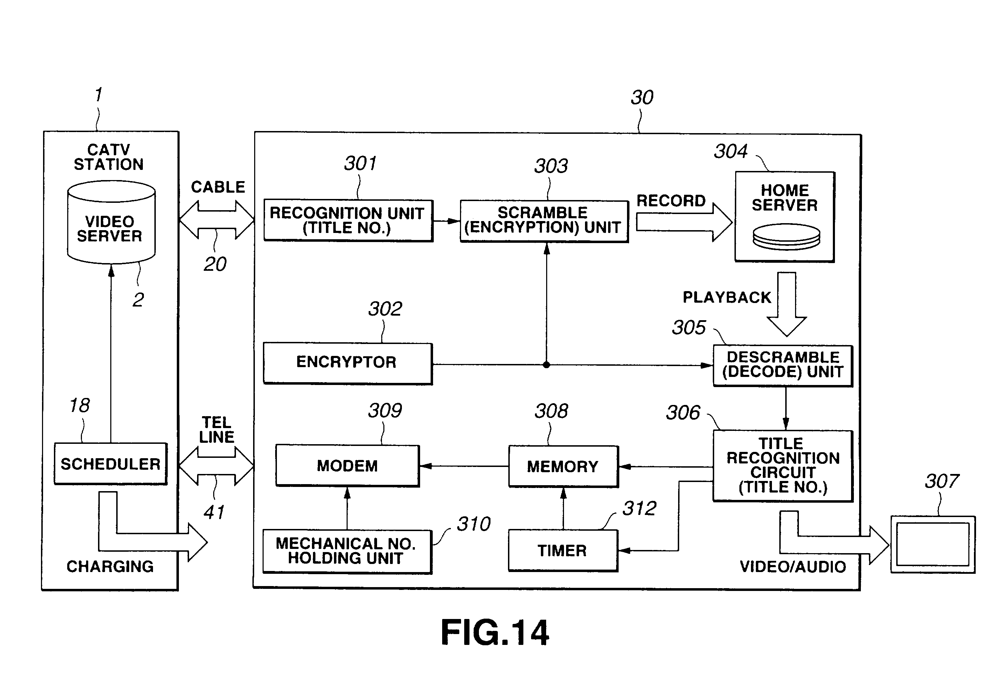

The present invention may also be applied to the home server 30 shown in Fig.14.

The home server 30 shown in Fig.14 differs from the home server of Figs.11 and 12 in having a timer 312. In the system of Figs.11 and 12, charging is made each time the chargeable information is used. In the system of Fig.14, there is provided the timer 312 and data accessed once is deemed to be used only once if it is used a number of times within a pre-set time period. The timer 312 has the function of supervising the time of initial information accessing, from title to title, not counting the number of times within the pre-set time if the title accessed is the title accessed previously, counting the accessing as the second accessing if the title accessed second time is the title accessed once but a pre-set time period has elapsed as from the first accessing, and of deeming the second accessing as the initial accessing and not counting the next accessing for the pre-set time period which begins with the second accessing.

That is, the home server 30 permits the reproducing decoding of the encoded information any number of times within the pre-set time period since the time the subscriber generates and decodes the encrypted information.

Although the home server is assumed to be a desk top type disc recording and/or reproducing apparatus, it may also be of a tape streamer type configured for recording and/or reproducing the information for plural cassette tapes. The home server may also be the combination of the tape-shaped recording medium and a random access recording medium, such as HDD or semiconductor memory.

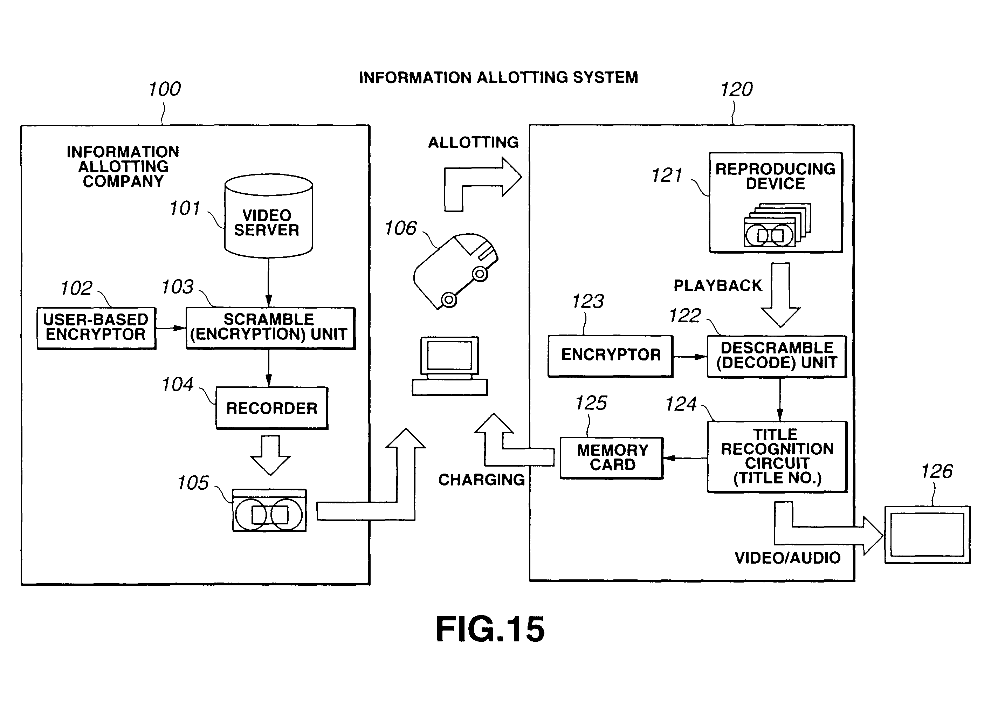

The present invention may also be applied to an information furnishing system shown in Fig.15. The system of Fig.15 differs most appreciably from the system of Fig.14 as to the information furnishing method. That is, the system of Fig.15 is characterized in that the recording medium carrying the information (removable recording medium, such as the tape, disc etc) is transferred by physical transporting means instead of being transmitted by electrical transmission means, such as the cable or the satellite.

A home server is installed in subscriber's premises where there no near-by rental video shop. The information is exchanged every pre-set period irrespective of whether the subscriber uses the information and, at this time, the subscriber is charged for the accessed information.

An information furnishing firm 100 selects the information of the category requested by the subscriber or the information anticipated to be used by the subscriber from a video server 101. The chargeable information is sent to a scrambler 103, which also is fed with the user-based encryption generated by a user-based encryption generator 102. The scrambler 103 synthesizes or appends the user-based encryption to the chargeable information to generate the encrypted chargeable information. The encrypted chargeable information from the scrambler 103 is recorded on a tape cassette 105 by a recorder 105. Although the recording medium is a tape cassette 105, as an example, it may also be a disc-shaped recording medium, such as a hard disc (HD), or a semiconductor memory, such as a memory card, it being only sufficient if the recording medium is a removable medium. The home server 30 may be configured to select the medium depending on a reproducing device 121 of the home server 120.

The home server 120 includes the recording device 121, a descrambler 122, an encryption generator 123 for generating the encryption used for decoding the descrambler 122, a title recognition circuit 124 for confirming the title number from the chargeable information descrambled and decoded by the descrambler 122 and a memory card 125 for storing the title number recognized by the title recognition circuit 124 for storing the title number recognized by the title recognition circuit 124 as the decoding state information.

When the chargeable information of the desired title is reproduced from the tape cassette 105 housed in the reproducing device 121, the decoding hysteresis information is stored in the memory card 125 of the user's premises. By recognizing the decoding hysteresis information from the memory card 125, the information for charging is generated in the information furnishing company 100 to charge the subscriber. The process for recording the recording information is as described above and hence is here omitted. Since the chargeable information scrambled from user to user is delivered from the information distributing company 100, the reproduction of the chargeable information from other users, if attempted, cannot be realized to prohibit unauthorized copying or dubbing to protect the right of the copyright owner.

Although the scrambling and descrambling employing the machine numbers proper to the system are used in the above-described embodiment, encryption may also be reflected in a polynominal used for solving the ECC.

From the above-described home server 30, the playback hysteresis information is inputted via the telephone network 41, inclusive of the Internet, and wired transmission unit 20, to the scheduler 18 of the CATV station 1. Based on the playback hysteresis information, the scheduler generates the information for charging the user, that is the information for charging.

Based on the playback hysteresis information, the scheduler 18 anticipates the chargeable information likely to be requested in future by the user. For example, plural chargeable information of categories (fields or genres) likely to be used in future by the user is anticipated. Specifically, if the chargeable information frequently reproduced by the user is the action motion picture, new action motion pictures are transmitted in advance from the video server 12 to the home server 30 irrespective of whether these motion pictures are actually requested by the user. The motion pictures possibly requested by the user may also be anticipated based on the names of the performers or on other key words. As the chargeable information, possible requests ofthe music video clips, game software or sports may be anticipated in addition to the motion pictures. The anticipation may also be made based on the categories.

In the VOD cable television system, the wired transmission unit 20 is not requested to have high concurrent transmission capability. The video server 12 also is not requested to have high concurrent processing capability or the high processing speed, large capacity or high speed accessing capability exhibiting high instantaneity. The server control software also is not requested to exhibit an intricate control capability.

Since the home server 30 sends the playback hysteresis information to the cable television center 1, it is possible for the cable television center 1 to acquire the information for charging. It is moreover possible to anticipate the chargeable information that will possibly be requested by the user in future.

Thus, the user is able to view a title he or she desires to view at a desired time. The user is also free to quit the viewing site at his or her convenience. The user is also not obliged to borrow or return the title at the rental shop.

Thus, it is possible with the VOD cable television system to curtail the costs in development or equipments to render inexpensive services to the user.

Also, the information proper to the home server 30 is scrambled by the chargeable information before the chargeable information delivered from the center 1 is reproduced in the home server 30, the chargeable information can only be reproduced in the home server 30. It is therefore possible to protect the copyright of the copyright owner.

## Claims

1. An information allotting system for allotting the chargeable information composed of data including video data and/or audio data, comprising:
an allotting center for allotting the chargeable information; and
information terminal means for storing the chargeable information allotted from the allotting center;
wherein
said allotting center allots the chargeable information based on the categories of the chargeable information transmitted from the allotting center; and wherein
if the chargeable information in the stored categories is reproduced and used, said information terminal means transmits the using information corresponding to the use to said allotting center.

2. The information allotting system according to claim 1 wherein
said information terminal means further includes
recording and/or reproducing means for storing said chargeable information in a random accessible recording medium and for reproducing the stored information;
decoding means for decoding the chargeable information reproduced from the recording and/or reproducing means if the encryption information appended to said chargeable information reproduced from the recording and/or reproducing means coincides the encryption information of said recording and/or reproducing means; and
identification code outputting means for outputting the using information composed of the identification codes of the chargeable information to said allotting center if said chargeable information is decoded from said decoding means;
said allotting center also including
charging information supervising means for charging for the chargeable information based on the received using information outputted by said identification code outputting means.

3. The information allotting system according to claim 2 wherein
if said chargeable information is decoded by said decoding means only in a specified time period, said identification code outputting means outputs the using information without regard to the number of times of decoding, if the decoding is made within said specified time period.

4. The information allotting system according to claim 2 wherein
if said chargeable information is to be recorded on said random accessible recording medium, said recording and/or reproducing means appends an identification code proper to the information terminal means.

5. The information allotting system according to claim 1
wherein
said allotting center further includes
recording and/or reproducing means for allotting, said recording and/or reproducing means for allotting recording and/or reproducing the chargeable information for a random accessible recording medium; and
transmission means for transmitting said chargeable information stored in said recording and/or reproducing means for allotting.

6. The information allotting system according to claim 5
wherein
said recording and/or reproducing means for allotting includes
a plurality of input/output processing means for respectively time-divisionally accessing said random accessible recording medium for processing said chargeable information inputted from outside for recording on said recording medium, said input/output processing means being fed with said chargeable information reproduced from said recording medium, said input/output processing means outputting the inputted chargeable information to said transmission means.

7. The information allotting system according to claim 1
wherein
said allotting center further includes
identification code appending means for appending the identification codes proper to the information terminal means to said chargeable information.

8. The information allotting system according to claim 7
wherein
said allotting center further includes
recording means for recording said chargeable information, carrying the identification code appended thereto by said identification code appending means, on a removable recording medium; and wherein
said information terminal means further includes
reproducing means for reproducing the chargeable information recorded on said removable recording medium; and
decoding means for decoding and outputting the chargeable information if the identification codes appended to said chargeable information reproduced from the reproducing means coincide with the identification codes of said information terminal means.

9. The information allotting system according to claim 1
wherein
said chargeable information allotted from said allotting center is transmitted over a wired transmission unit, said chargeable information being transmitted irrespective of whether or not the chargeable information is used in said information terminal means based on the using information and on the category information of said chargeable information .

10. The information allotting system according to claim 9
wherein
said wired transmission unit is the Internet.

11. The information allotting system according to claim 1
wherein
said chargeable information allotted from said allotting center is transmitted over a satellite, said chargeable information being transmitted irrespective of whether or not the chargeable information is used in said information terminal means based on the using information and the category information of said chargeable information.

12. The information allotting system according to claim 1
wherein
said chargeable information, allotted from said allotting center, is transmitted over an analog transmitting path of a cable television using a vacant channel of an analog transmission frequency band.

13. The information allotting system according to claim 1
wherein
said allotting center further includes storage means for storing the using information or the category information of said chargeable information within a pre-set time period; wherein
charging is made based on the using information stored in said storage means, from one information terminal means to another; and wherein
said chargeable information to be allotted to each information terminal means is determined from said using information and said category information.

14. An information allotting system for allotting the chargeable information composed of data including video data and/or audio data, comprising:
an allotting center for allotting the chargeable information; and
information terminal means for storing the chargeable information allotted from the allotting center;
wherein
said information terminal means includes
reproducing means for reproducing the stored chargeable information;
decoding means for decoding the chargeable information on coincidence of the encryption information appended to the chargeable information outputted from said reproducing means with the encryption information of said information terminal means; and
storage means for storing the hysteresis information testifying to the decoding of said chargeable information;
said allotting center charging said information terminal means based on said hysteresis information.

15. The information allotting system according to claim 14
wherein
said encryption information is appended when allotting said chargeable information in said allotting center.

16. The information allotting system according to claim 14
wherein
said encryption information is appended to said chargeable information when storing the chargeable information in said information terminal means.

17. The information allotting system according to claim 14
wherein
said information terminal means does not store the hysteresis information in said storage means if said chargeable information decoded by said decoding means is decoded within a pre-set time period as from the decoding of the chargeable information by said decoding means.

18. The information allotting system according to claim 14
wherein
said allotting center allots the chargeable information to said information terminal means based on the category information transmitted from said information terminal means and on said hysteresis information.

19. The information allotting system according to claim 14
wherein
said chargeable information allotted from the allotting center is transmitted over an analog transmission path of a cable television.

20. The information allotting system according to claim 19
wherein
said chargeable information is transmitted using a vacant band of the frequency range in which the information signals are transmitted.

21. The information allotting system according to claim 14
wherein
said chargeable information allotted from the allotting center is transmitted over the Internet.

22. An information allotting system for allotting the chargeable information composed of data including video data and/or audio data, comprising:
an allotting center for allotting the chargeable information; and
information terminal means having reproducing means for reproducing said chargeable information from a removable recording medium in which the chargeable information allotted from the allotting center is stored;
said information terminal means further including
decoding means for decoding said chargeable information on coincidence of the encryption information appended to the chargeable information outputted from said reproducing means with the encryption information of said information terminal means; and
storage means for storing the hysteresis information testifying to the decoding of said chargeable information;
said allotting center charging said information terminal means based on said hysteresis information.

23. The information allotting system according to claim 22
wherein
said allotting center further includes
encoding means for appending said encryption information to said chargeable information; and
recording means for recording said chargeable information outputted from said encoding means on said removable recording medium.

24. The information allotting system according to claim 22
wherein
said information terminal means does not store the hysteresis information in said storage means if said chargeable information decoded by said decoding means is decoded within a pre-set time period as from the decoding of the chargeable information by said decoding means.

25. The information allotting system according to claim 22
wherein
said allotting center allots said chargeable information to said information terminal means based on the category information of said chargeable information transmitted from said information terminal means and said hysteresis information.

26. The information allotting system according to claim 22
wherein
said hysteresis information is transmitted over the Internet to said allotting center.

27. The information allotting system according to claim 22
wherein
said information terminal means transmits the hysteresis information stored on said storage means to the allotting center after lapse of a pre-set time.

28. An information transmission apparatus for transmitting the chargeable information composed of data including image and/or audio data to an information terminal comprising:
supervising means for being fed with the category information of said chargeable information transmitted from the information terminal to output an output control command which performs control to output the chargeable information included in said category information; and
output means for outputting said chargeable information recorded on a recording medium to said information terminal based on said output control command from said supervising means.

29. The information transmission apparatus according to claim 28
wherein
said output means further includes
recording and/or reproducing means for reproducing said chargeable information recorded on a random accessible recording medium; and
a plurality of output processing means for being fed with said chargeable information reproduced from said recording and/or reproducing means on time-divisionally accessing said recording and/or reproducing means to output said chargeable information to said information terminal.

30. The information transmission apparatus according to claim 29
wherein
said output means further includes
a video tape recorder for reproducing a tape-shaped recording medium carrying the recorded chargeable information to output the reproduced chargeable information; and
a plurality of input processing means for being fed with said chargeable information outputted from said video tape recorder to output said chargeable information to said recording and/or reproducing means time-divisionally in conjunction with said output means.

31. The information transmission apparatus according to claim 28 further comprising:
modulating means for modulating said chargeable information outputted from said output means;
mixing means for mixing said chargeable information outputted from said modulating means; and
transmitting means for transmitting said chargeable information outputted from said mixing means to said information terminal means.

32. The information transmission apparatus according to claim 31 further comprising:
second modulating means for modulating video signals and/or audio signals of the television broadcast inputted from the head end equipment to output the modulated television signals to said mixing means.

33. The information transmission apparatus according to claim 28
wherein
said output means outputs the chargeable information to said information terminal using a vacant band of the transmission band via which the television signals are transmitted.

34. The information transmission apparatus according to claim 28
wherein
said output means outputs the chargeable information to said information terminal over the Internet.

35. The information transmission apparatus according to claim 28
wherein
said output means appends the encryption information discriminating each information terminal to said chargeable information to output the resulting information to said information terminal means.

36. The information transmission apparatus according to claim 35
wherein
said output means includes
recording means for recording said chargeable information having appended thereto the encryption information on a removable recording medium.

37. The information transmission apparatus according to claim 28
wherein
said supervising means is fed from said information terminal means with the hysteresis information specifying whether or not said information terminal means has used said chargeable information, said supervising means charging each information terminal from the hysteresis information for using the chargeable information.

38. An information reception apparatus for receiving the chargeable information composed of data including video and/or audio data allotted from the allotting center, comprising:
transmission means for transmitting the information specifying the category in said chargeable information to said allotting center;
reproducing means for reproducing said chargeable information from a recording medium on which has been recorded said chargeable information allotted from said allotting center based on said category information;
control means for controlling said recording and/or reproducing means in such a manner as to select the desired chargeable information from the titles of the chargeable information recorded on said recording medium and to reproduce the chargeable information recorded on said recording medium; and
storage means for storing the hysteresis information indicating that the chargeable information has been used.

39. The information reception apparatus according to claim 38 further comprising:
encryption information appending means for receiving said chargeable information allotted from said allotting center to append the identification code proper to the system to the received chargeable information;
recording means for receiving said chargeable information outputted from said recording and/or reproducing means as input to decode said chargeable information on coincidence of the encryption information appended to said chargeable information with the encryption information of the information receiving apparatus.

40. The information reception apparatus according to claim 38
wherein
if said decoding means decodes said chargeable information, the hysteresis information specifying the fact of use of said chargeable information is stored in said storage means.

41. The information reception apparatus according to claim 40
wherein
if said chargeable information decoded within a pre-set time as from storage of said hysteresis information in said storage means is re-decoded by said decoding means, said hysteresis information is not stored in said storage means.

42. The information reception apparatus according to claim 38
wherein
said recording medium is a removable recording medium;
the chargeable information to which has been appended the encryption information composed of an identification code proper to the reception apparatus is recorded on said recording medium;
said reproducing means reproducing the chargeable information recorded on said removable recording medium.

43. The information reception apparatus according to claim 38
wherein
said reproducing means reproduces the chargeable information recorded on said recording medium and selected from the title of said chargeable information

44. The information reception apparatus according to claim 43
wherein
the title of the chargeable information used is included in the hysteresis information stored in said storage means.

45. The information reception apparatus according to claim 38 further comprising:
input means fed via a cable television transmission path with said chargeable information allotted from said allotting center; and
recording means for being fed with said chargeable information outputted from said input means to record the chargeable information on said recording medium.

46. The information reception apparatus according to claim 45
wherein
said chargeable information is transmitted over a vacant band of the frequency band in which the television signals are transmitted.

47. The information reception apparatus according to claim 38 further comprising:
input means for being fed with said chargeable information allotted from said allotting center over the Internet; and
recording means for recording said chargeable information on said recording medium, said chargeable information having been outputted from said input means and inputted to said recording means.

48. The information reception apparatus according to claim 38
wherein
said storage means is a removable storage means.

49. An information allotting method for allotting the chargeable information composed of data including video and/or audio data from an allotting center to each information terminal, comprising:
a first step of transmitting the category-specifying category information of the chargeable information from said information terminal to said allotting center;
a second step of allotting the chargeable information from said allotting center to said information terminal, based on said category information, irrespective of whether the allotted information will be used by said information terminal; and
a third step of selectively reproducing said chargeable information allotted by said information terminal.

50. The information allotting method according to claim 49 further comprising:
a fourth step of transmitting the use-dependent using information to said allotting center on using said chargeable information reproduced in said third step.

51. The information allotting method according to claim 50
wherein
said fourth step includes
a step of decoding the encryption information appended to said chargeable information for discriminating the information terminal from said chargeable information reproduced in said third step; and
a step of decoding said chargeable information on coincidence of the decoded encryption information with the identification information; proper to the information terminal;
the using information specifying the fact of use of said chargeable information being transmitted to said allotting center on decoding said chargeable information.

52. The information allotting method according to claim 51 further comprising:
a fifth step of charging said information terminal based on the transmitted using information.

53. The information allotting method according to claim 52 further comprising:
a sixth step of determining said chargeable information to be allotted to said information terminal based on said using information and the category information to allot the determined chargeable information.

54. The information allotting method according to claim 51
wherein
said fourth step does not transmit said using information to said allotting center even if said chargeable information is re-decoded in a pre-set time.

55. The information allotting method according to claim 49
wherein
said second step includes a step of recording said chargeable information on a recording medium of said information terminal when said chargeable information is allotted to said information terminal; and wherein
when recording the chargeable information on the recording medium, the encryption information composed of identification codes proper to said information terminal is appended to said chargeable information to record the resulting information.

56. The information allotting method according to claim 55
wherein
said recording medium is a random-accessible recording medium.

57. The information allotting method according to claim 49
wherein
said second step includes a recording step of recording said chargeable information on a random-accessible recording medium; and
a transmitting step of reproducing said chargeable information recorded on said recording medium based on said category information and of transmitting said chargeable information to said information terminal irrespective of whether or not said chargeable information is used.

58. The information allotting method according to claim 49
wherein
said second step includes
a step of appending to said chargeable information the encryption information specifying the identification codes proper to the respective information terminals.

59. The information allotting method according to claim 58
wherein
said second step includes
a step of recording on the removable recording medium said chargeable information to which has been appended said encryption information.

60. The information allotting method according to claim 49
wherein
said chargeable information is transmitted over an analog transmission path for cable television.

61. The information allotting method according to claim 60
wherein
said chargeable information is transmitted using the vacant band of the transmission band in which television signals are transmitted.

62. An information allotting method for allotting the chargeable information composed of data including video and/or audio data from an allotting center to each information terminal, comprising:
a first step of transmitting the category-specifying category information of the chargeable information from said information terminal to said allotting center;
a second step of allotting the chargeable information from said allotting center to said information terminal, based on said category information, irrespective of whether the allotted information will be used by said information terminal;
a third step of decoding said chargeable information on coincidence of the encryption information appended to said chargeable information with the encryption information of each information terminal on reproducing the chargeable information and of transmitting the hysteresis information specifying the fact of use of the chargeable information to said allotting center; and
a fourth step of charging said information terminal by said allotting center based on said hysteresis information.

63. The information allotting method according to claim 62
wherein
said third step further includes
an appending step of appending said encryption information to said chargeable information allotted in said second step; and
a recording step of recording said chargeable information, to which has been appended said chargeable information, on recording means of said information terminal;
said chargeable information recorded in said recording step being reproduced.

64. The information allotting method according to claim 62
wherein
said second step when allotting the chargeable information to said information terminal appends said encryption information to said chargeable information and allots the resulting information.

65. The information allotting method according to claim 62
wherein
said third step does not allot to said allotting center said chargeable information re-decoded after decoding within a pre-set time.

66. The information allotting method according to claim 62 further comprising:
a fifth step of allotting said chargeable information to said information terminal based on said hysteresis information allotted in said third step and said category information.

67. The information allotting method according to claim 62 wherein
said chargeable information is transmitted in said second step using a cable television analog transmission path.

68. The information allotting method according to claim 67 wherein
said chargeable information is transmitted using a vacant band of the frequency band in which television signals are transmitted.

69. An information allotting method for allotting the chargeable information composed of data including video and/or audio data from an allotting center to each information terminal, comprising:
a first step of appending the encryption information discriminating each information terminal to said chargeable information stored in said allotting center;
a second step of recording said chargeable information, to which has been appended the encryption information, on a removable recording medium;
a third step of selectively reproducing said chargeable information recorded on said removable recording medium, at said information terminal;
a fourth step of decoding said chargeable information on coincidence of said encryption information contained in the reproduced chargeable information with the encryption information of said information terminal and storing the hysteresis information specifying that the encryption information has been decrypted; and
a fifth step of charging said information terminal by said allotting center based on the stored hysteresis information.

70. The information allotting method according to claim 69 wherein
said fourth step does not store said hysteresis information if said encryption information decoded within a pre-set time period and subsequently decoded within said period is re-decoded.

71. The information allotting method according to claim 69 wherein
said first step reproduces said chargeable information stored based on the category information of the chargeable information from said information terminal to append the encryption information.

72. The information allotting method according to claim 71
wherein
the stored chargeable information is reproduced based on the hysteresis information stored in said fourth step and on the category information in said first step to append said encryption information to the reproduced chargeable information.

73. The information allotting method according to claim 69
wherein
said hysteresis information is stored in a memory card in said fourth step; and wherein
said information terminal is charged in said fifth step based on the hysteresis information stored in said memory card.

74. An information transmitting method for allotting the chargeable information composed of data including video and/or audio data from an allotting center to each information terminal, comprising:
a first step of receiving the category-specifying category information of the chargeable information from said information terminal to said allotting center; and
a second step of transmitting said chargeable information contained in said category information to each information terminal irrespective of whether or not said chargeable information is used by each information terminal.

75. The information transmitting method according to claim 74 further comprising:
a third step of receiving from said information terminal the hysteresis information specifying the fact of use of the chargeable information, transmitted to said information terminal, to charge said information terminal based on said hysteresis information.

76. The information transmitting method according to claim 74
wherein
said second step includes
a reproducing step of reproducing said chargeable information recorded on said recording medium and included in said category information; and
a transmitting step of transmitting the reproduced chargeable information to each information terminal.

77. The information transmitting method according to claim 76
wherein
said recording medium is a random accessible recording medium fed with said chargeable information reproduced by a plurality of output processing means time-divisionally accessing said recording medium; said output processing means transmitting said chargeable information to each information terminal.

78. The information transmitting method according to claim 77
wherein
said recording medium also encompasses a tape-shaped recording medium; and wherein
said tape-shaped recording medium carrying the recorded chargeable information is reproduced and the reproduced chargeable information is time-divisionally recorded on said random accessible recording medium.

79. The information transmitting method according to claim 76
wherein
said transmitting step further includes
a modulating step of modulating the reproduced and inputted chargeable information;
a mixing step of mixing the modulated and inputted chargeable information; and
a transmitting step of transmitting the mixed chargeable information to said information terminal.

80. The information transmitting method according to claim 79
wherein
said transmitting step modulates telecast video and/or audio signals inputted from a head-end equipment; the modulated television signals being mixed at said mixing step with said chargeable information.

81. The information transmitting method according to claim 74
wherein
said chargeable information is transmitted to said information terminal using a vacant band of the transmission band in which television signals are transmitted.

82. The information transmitting method according to claim 74
wherein
said second step further includes
an appending step of appending the encryption information discriminating each information terminal to said chargeable information; the chargeable information outputted from said appending step being outputted to each information terminal.

83. The information transmitting method according to claim 82
wherein
said second step further includes
a recording step of recording said chargeable information, to which has been appended the encryption information, on a removable recording medium.

84. An information receiving method for receiving the chargeable information allotted from an allotting center, said chargeable information being composed of data including video and/or audio data, comprising:
a first step of transmitting the category-specifying category information, in the chargeable information, to said allotting center;
a second step of selectively reproducing the chargeable information included in said category information from titles of the chargeable information; and
a third step of storing the hysteresis information specifying the fact of use of said chargeable information; and
a fourth step of transmitting the stored hysteresis information to said allotting center.

85. The information receiving method according to claim 84
wherein
said second step includes
a reception step of receiving said chargeable information allotted from said allotting center;
an appending step of appending the encryption information composed of the identification codes to the received chargeable information;
a recording step of recording said chargeable information recorded in said recording step on a recording medium; and
a decoding step of selectively reproducing the chargeable information recorded in said recording step from the titles of said chargeable information and of decrypting the encryption information appended to said chargeable information to decode the chargeable information;
said third step storing the hysteresis information specifying the fact of use of the chargeable information on decoding the chargeable information at said decoding step.

86. The information receiving method according to claim 85
wherein
said third step does not store the hysteresis information if the decoded chargeable information is re-decoded in said second decoding step within a pre-set time period as from storage of the chargeable information.

87. The information receiving method according to claim 85
wherein
said recording medium is a random accessible recording medium.

88. The information receiving method according to claim 85
wherein
said receiving step receives said chargeable information transmitted using a vacant band of the frequency band in which the television signals are transmitted.

89. The information receiving method according to claim 86
wherein
said recording medium encompasses a tape-shaped recording medium;
said recording step recording on said tape-shaped recording medium;
said decoding step on selecting a title of the chargeable information recorded on said tape-shaped recording medium reproducing said chargeable information from said random accessible recording medium to which the chargeable information has been transferred from said tape-shaped recording medium.

90. The information receiving method according to claim 84
wherein
said second step selectively reproduces said chargeable information from a removable recording medium on which has been recorded the chargeable information.

91. The information receiving method according to claim 90
wherein
said chargeable information recorded on said removable recording medium has appended thereto the encryption information composed of identification codes;
said second step selectively reproducing said chargeable information from said removable recording medium and decoding said chargeable information if the encryption information of the reproduced chargeable information coincides with the identification codes proper to a system;
said third step on decoding the chargeable information stores the hysteresis information specifying the fact of using the chargeable information.
